# EUROPEAN PATENT APPLICATION

(11) **EP 1 480 011 A1**
(43) Date of publication of application: **24.11.2004**
(21) Application number: 04076355.9
(22) Date of filing: 05.05.2004
(51) Int. Cl.: G01C 21/34

(54) **Vehicle navigation point of interest**

(30) Priority: 22.05.2003 US 443289
(71) Applicant: Delphi Technologies, Inc., Troy, MI 48007 (US)
(72) Inventor: Bickford, Brian L., Kokomo, IN 46902 (US); Szabo, Ronald J., Noblesville, IN 46060 (US); Burch, Jeffrey H., Kokomo, IN 46902 (US)
(74) Representative: Denton, Michael John

(57) **Abstract**

The present invention provides a navigation system (10) for assisting locating points of interest during vehicle navigation. The system includes a processor (20) enabled by software to receive and store a user selection of preferred visitation points and a user selected time and to determine and indicate a subset of the preferred visitation points (64) that are located within a predetermined location (50) relative to the vehicle position at the user selected time or relative to a selected destination (62).

## Description

### TECHNICAL FIELD

This invention relates generally to vehicle navigation systems and, more particularly, to a vehicle navigation system utilizing point of interest data.

### BACKGROUND OF THE INVENTION

Vehicle navigation systems have been developed and are increasingly becoming available for use in assisting drivers to navigate a vehicle. For example, onboard navigation systems are currently provided in some automotive vehicles to assist the driver of the vehicle in navigating along a route or roadway system to reach a desired destination.

The development of the satellite-based global positioning system (GPS) by the United States Department of Defense has greatly enhanced navigation. With the use of a GPS receiver, position information can be received and used to calculate the current latitude, longitude, and altitude of the receiver.

With its widespread availability, GPS is now relied on to compute a vehicle's position and even speed in order to provide vehicle navigation guidance. One such vehicle navigation system is the subject of U.S. Patent No. 5,964,821, by Brunts et al, assigned to the assignee of the present invention, the disclosure of which is incorporated by reference. The vehicle navigation system provided by Brunts et al. has a destination database containing a plurality of categorized destinations and the latitude and longitude of each destination. User selectable menu controls are provided to sequence through and select various categories and destinations from a menu selection. A processor receives the current position information from a GPS receiver and determines a straight line direction and distance from the current position to a selected destination.

The vehicle navigation system provided by Brunts et al. also has a sort-by-distance selection for sorting a category of destinations by radial distance. This function allows a user to view the distance and direction of the considered destinations relative to the vehicle's present position. The system also may be configured to select only those destinations located within a limited search zone.

The Brunts et al patent provides an innovative basis upon which further advancements in vehicle navigation systems may be created.

### SUMMARY OF THE INVENTION

The present invention is directed to a vehicle navigation system that indicates a subset of preferred visitation points that are located within a predetermined location relating to the vehicle position. The invention is also directed to methods of providing a point of interest (POI) alert to a user of a vehicle navigation system. For example, the system allows a user selected time for which to locate preferred POIs relative to the vehicle's present position at the user selected time.

The vehicle navigation system includes a navigation processor that is coupled to a GPS receiver and a user interface. Signals received from the GPS receiver allow the navigation processor to determine the vehicle position and then to calculate navigation solutions, for example, a route from the vehicle's present position to a selected destination, the proximity of POIs relative to the vehicle's present position, or the proximity of POIs relative to the selected destination. The navigation system may also include various interfaces for receiving data regarding POIs, for example, compact disc (CD), digital video disc (DVD), memory card, vehicle data bus, data communications, and wireless interfaces.

The navigation processor includes software that enables the navigation system to receive preferred visitation points that are selected by the user from the available POIs and to receive a user selected time upon which to alert the user of preferred visitation points that are within a predetermined location, for example the visitation point is within travelling distance at the user selected time. The user selected time may be based on the time of day, elapsed travel time, or remaining time to travel to a destination. The predetermined location may be defined by the particular shape and size of a geographic area positioned relative to the vehicle's position or to a selected destination, or defined by the estimated travel time required to reach the POI.

Upon the user selected time, an alert is sounded and/or displayed by the navigation system if the vehicle's present position and a preferred POI are found to be within the predetermined location relative to the vehicle's present position. If the user selects a POI, the navigation system calculates an intermediate route from the vehicle's present position to the selected POI.

Additionally, the navigation system is capable of monitoring the vehicle condition and, if vehicle service is advisable, can locate nearby POIs providing the required service and calculate a route to a selected POI.

The vehicle navigation system may also be integrated into a vehicle entertainment system that provides radio reception and playback of media, for example, CDs.

The present invention also provides methods of providing POI information to an information subscriber, such as a vehicle navigation system. The method provides for the receiving of a category of POIs or type of service request from the information subscriber and providing the information subscriber with a subset of POIs providing the requested type of service or category of POIs which are located within a predetermined location relative to the information subscriber or a selected destination.

According to one embodiment of the invention, a navigation apparatus for assisting locating POIs during vehicle navigation includes a processor coupled with a user interface, data storage coupled with the processor and capable of storing data representing POIs, a position indicating device enabling the processor to determine a vehicle position, and software enabling the processor to: receive and store a user selection of preferred visitation points from the POIs, and determine and indicate through the user interface a subset of the preferred visitation points that are located within a predetermined location relating to the vehicle position.

According to another embodiment of the present invention, software for a processor in a vehicle navigation apparatus enables the processor to perform a method of providing a POI alert, and includes the steps of selecting at least one preferred category of POIs, determining the vehicle position, determining a subset of the POIs of the preferred category that are within a predetermined location relative to the vehicle position, and alerting the user of the subset.

One method according to the present invention provides a POI alert in a user interface in a vehicle navigation apparatus, including the steps of selecting at least one preferred category of POIs, determining the vehicle position, determining a subset of the POIs of at least one category that are within a predetermined location relative to the vehicle position, and alerting the user of the subset.

Another method of the present invention provides a POI alert in a vehicle navigation apparatus, including the steps of receiving vehicle status information, determining if a specified vehicle service is advisable, determining the vehicle position, determining a subset of POIs that provide the specified vehicle service and that are within a predetermined location relative to the vehicle position, and alerting the driver of the subset.

Yet another method of the present invention provides POI information to an information subscriber, including the steps of receiving a type of service from the information subscriber, receiving the position of the information subscriber, determining a subset of the POIs that are within a predetermined location relative to the position and that provides the requested service, and providing the subset to the information subscriber.

Yet a further method of the present invention provides POI information to an information subscriber, including the steps of receiving a category of POIs from the information subscriber, receiving the position of the information subscriber, determining a subset of the POIs that are within a predetermined location relative to the position and that are of the received category, and providing the subset to the information subscriber.

### BRIEF DESCRIPTION OF THE DRAWINGS

The present invention will now be described, by way of example, with reference to the accompanying drawings, in which:
Fig. 1 is a plan view of the faceplate and user interface of a vehicle navigation system according to the present invention;
Fig. 2 is a schematic block diagram of the vehicle navigation system of Fig. 1;
Fig. 3 is a first navigational depiction of a vehicle employing the navigation system of Fig. 1;
Fig. 4A is a second navigational depiction of a vehicle employing the navigation system of Fig. 1;
Fig. 4B is a third navigational depiction of a vehicle employing the navigation system of Fig. 1;
Fig. 4C is a fourth navigational depiction of a vehicle employing the navigation system of Fig. 1;
Fig. 4D is a fifth navigational depiction of a vehicle employing the navigation system of Fig. 1;
Fig. 5 is a graphic illustration of the classification of data representing POIs in the vehicle navigation system of Fig. 1;
Fig. 6 is a flowchart illustrating a method of selecting preferred POIs according to the present invention;
Fig. 7 is a flowchart illustrating a method for alerting the user of a vehicle navigation system of selected POIs according to the present invention;
Fig. 8 is a flowchart illustrating a method of providing POI information relating to vehicle service according to the present invention; and
Fig. 9 is a flowchart illustrating a method of providing POI information relating to preferred categories according to the present invention.

Corresponding reference characters indicate corresponding parts throughout the several views. Although the drawings represent an embodiment of the present invention, the drawings are not necessarily to scale and certain features may be exaggerated in order to better illustrate and explain the present invention. The exemplifications set out herein illustrate an embodiment of the invention and such exemplifications are not to be construed as limiting the scope of the invention in any manner.

### DESCRIPTION OF INVENTION

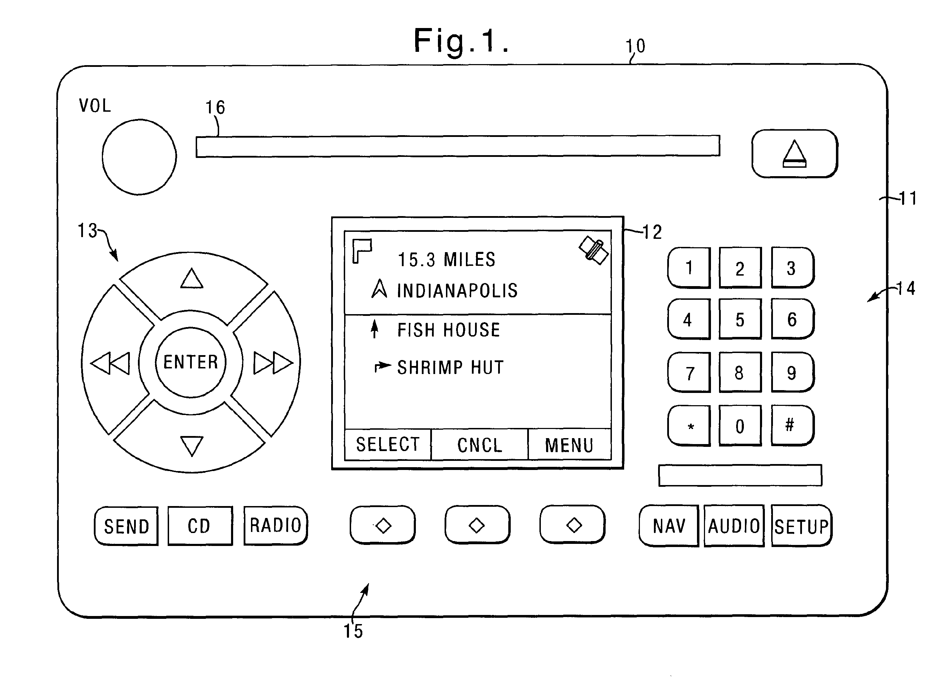

Fig. 1 shows an exemplary embodiment of vehicle navigation system 10 according to the present invention. Vehicle navigation system 10 may be configured as a stand-alone navigation apparatus, or, as shown in Fig. 1, the navigation system may be integrated into an audio entertainment system of the type generally configured for installation in the instrument panel (not shown) of an automotive vehicle (not shown).

Navigation system 10 includes faceplate 11 assembled on the front side of a housing (not shown). The housing encloses various components of the navigation system, while faceplate 11 encompasses user interface components of navigation system 10, for example, navigation display 12, fixed pushbuttons 13, key matrix 14, programmable pushbuttons 15, and CD/DVD receptacle 16.

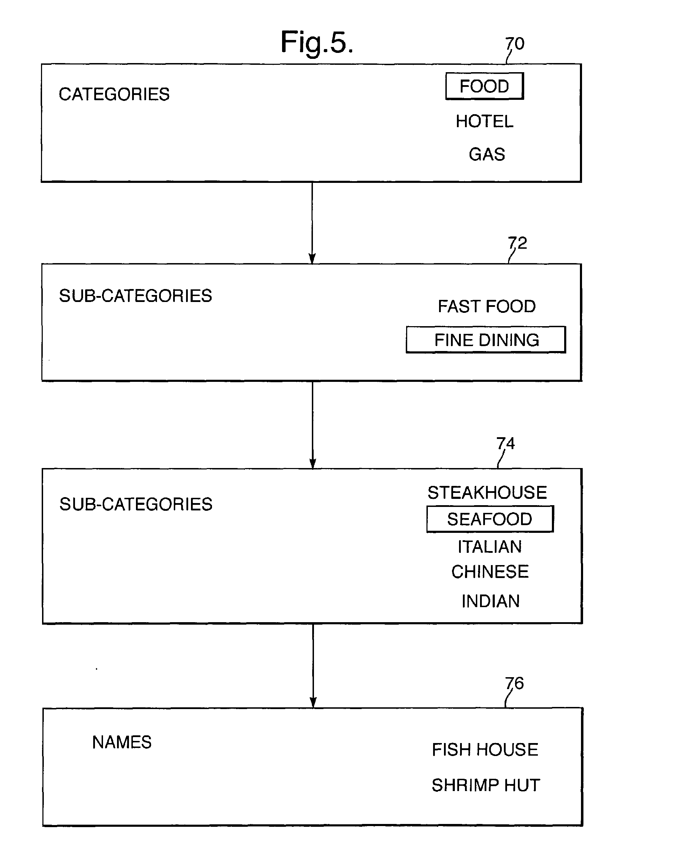

Navigation display 12 is capable of displaying navigation information, including, for example, destination range and distance, POI direction and distance, turn-by-turn route guidance instructions, selectable POI categories, subcategories, and names of POIs (as shown, for example, in Fig. 5), function labels for programmable pushbuttons 15, etc. Various pushbuttons 13 and key matrix 14 provide user selection of audio entertainment and navigation system functions and provide for selection of displayed menu items and POI information items. Programmable pushbuttons 15 vary in function depending on the selected display or menu, which may include function labels located on display 12 just above the individual programmable pushbuttons 15. CD/DVD receptacle 16 provides for the inserting and expelling of removable media such as CDs and DVDs that may be used in connection with both the audio entertainment system and navigation system 10.

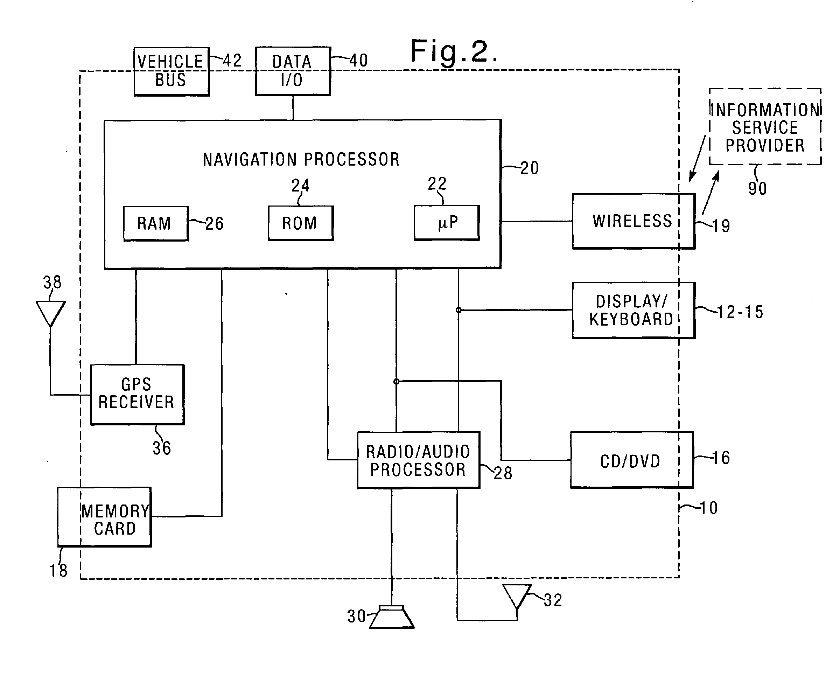

Referring to Fig. 2, the exemplary embodiment of vehicle navigation system 10 includes navigation processor 20 and may also include radio/audio processor 28. Navigation processor 20 includes microprocessor 22, and may include read-only memory (ROM) 24 and random access memory (RAM) 26. Navigation processor 20 is also connected to a user interface, generally including display 12, fixed pushbuttons 13, key matrix 14, programmable pushbuttons 15, CD/DVD player 16, memory card interface 18, wireless interface 19, GPS receiver 36, data communications interface 40, and vehicle data bus 42.

If present, radio/audio processor 28 may also be connected to navigation processor 20, display 12, fixed pushbuttons 13, key matrix 14, programmable pushbuttons 15, and CD/DVD player 16. Antenna 32 provides radio-frequency (RF) reception for radio/audio processor 28, and may also provide RF reception from information service provider 90 for navigation processor 20. Speakers 30 are driven by radio/audio processor 28 and may be used not only for audio entertainment listening, but also for audible alerts and voice information and prompts commanded by navigation processor 20.

ROM 24, RAM 26, and other components of navigation system 10, may be built into microprocessor 22; for example, microprocessor 22 may include a built-in GPS receiver or radio/audio processor. Microprocessor 22 is enabled by software that may be stored in one or both of ROM 24 and RAM 26. Various components connected to navigation processor 20 may be used to load software and data related to navigation and POIs, including key matrix 14, CD/DVD player 16, memory card interface 18, wireless interface 19, audio/radio processor 28, GPS receiver 36, data communication interface 40, and vehicle bus interface 42.

Software or data that is loaded into navigation system 10, may be provided by either the user of the system, or by information service provider 90. For example, the user may load data describing POIs from a CD, DVD, personal digital assistance (PDA) or personal computer (not shown), or information service provider 90 may provide data describing POIs in a local range of reception of information service provider 90, or for an area determined and requested by navigation processor 20.

Navigation processor 20 may communicate with information service provider 90 using, for example, radio/audio processor 28, wireless interface 19, data communication interface 40, or through a personal computer or PDA (not shown) connected to data communication interface 40. A plurality of memory cards, CDs, or DVDs may be selected from to load data describing POIs and navigation information for a predefined trip or geographic territory. Navigation processor 20 may be enabled to receive such data in a standard format, for example, Shared Data Access Library (SDAL) (www. sdalformat. com) .

Navigation processor 20 determines the position of vehicle 1 containing navigation system 10 from signals received from GPS receiver 36. For example, navigation processor 20 can determine the latitude and longitude of vehicle 1, and may also determine the altitude and velocity of vehicle 1.

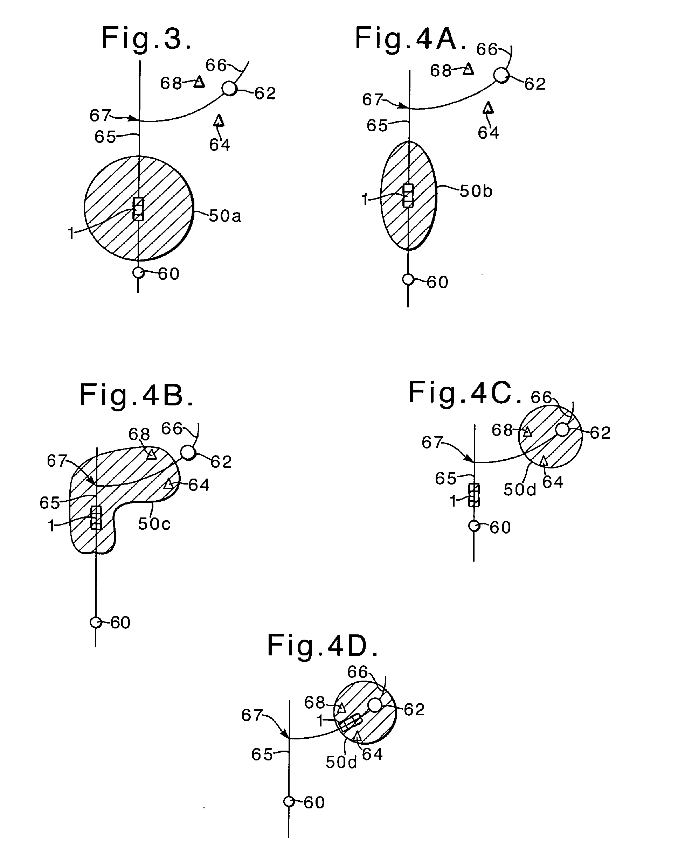

Navigation system 10 may perform many navigation-related functions, such as those known in the art. For example, referring to Fig. 3, navigation system 10 may be operated by a user to determine a route between departure point 60, which may be the present position of vehicle 1, to a selected destination 62. Navigation system 10 may provide such information regarding the calculated route such as, for example, distance, direction, and name of destination 62, as shown in the upper portion of display 12 in Fig. 1. Navigation system 10 may also provide navigation assistance such as, for example, audible or displayed details of first road 65, the present distance from and turn required at intersection 67, and the distance along second road 66 from intersection 67 to destination 62.

Navigation system 10 is capable of processing information and assisting navigation relating to POIs. Specifically, as shown in Fig. 3, the user may specify a predetermined location which is located relative to vehicle 1, for example, geographic area 50a. Geographic area 50a may be a geographic area of a particular size and shape, or may be defined by a specified travel time from the present position of vehicle 1. For example, as shown in Fig. 3, geographic area 50a may be defined by the geographic area around vehicle 1 that is less than five minutes of travel time from the present position of vehicle 1, or, as shown in Fig. 4A, geographic area 50b may be defined by an ellipse having a major axis of ten miles and a minor axis of five miles, for example.

Additionally, as shown in Fig. 4B, geographic area 50c may be formable so that it evenly bounds a portion of a non-linear travel route in the forward direction of the vehicle. Alternatively, such geographic areas may be further defined in terms of both travel time and estimated visitation time to determine if a visit is feasible given the user's predetermined schedule. In any case, geographic area 50 defines a predetermined location relative to vehicle 1 for which the user instructs navigation system 10 to provide an alert for preferred visitation points 64, 68 located within geographic area 50.

Referring to Fig. 4C, the user may also specify a predetermined location which is located relative to a selected destination 62. For example, geographic area 50d may be located relative to destination 62 and be a geographic area of a particular size and shape, or may be defined by a specified travel time from destination 62. As shown in Fig. 4C, geographic area 50d may be defined by the user while vehicle 1 is en route or before beginning travel to destination 62. Advantageously, navigation system 10 provides an alert for preferred visitation points located within geographic area 50d once the present position of vehicle 1 is also within geographic area 50d, as shown in Fig. 4D. Thus, the predetermined location and preferred points of interest located relative to destination 62 may be specified by the user while planning the route or during travel.

The present invention also allows the user to provide a selected alert definition. The user first selects a location definition, for example, the time of day, elapsed trip time, or remaining trip time. Then, in terms of the selected location definition, in this example a time basis, the user may select an alert time. For example, 10:00 a.m., 10:00 a.m. to 10:15 a.m., or thirty minutes remaining trip time from destination 62. By selecting an alert time, navigation system 10 only provides an alert for those visitation points 64, 68 which are located within geographic area 50 as located relative to the position of vehicle 1 at the user selected alert time. By specifying an alert time, the user can advantageously select desired visitation points and times while planning a route and before beginning travel. When the selected criteria is met, navigation system 10 may provide a display or audible alert of visitation points 64, 68.

Referring to Fig. 5, the user may also select from among categories, subcategories, names, or other classifications of POIs. For example, classification 70 provides the categories of food, hotel, and gas from which the user may select. By selecting food, classification 72 provides a list of subcategories: fast food and fine dining. By selecting fine dining from classification 72, classification 74 provides a list of additional subcategories: steakhouse, seafood, Italian, Chinese, and Indian. By selecting seafood, classification 76 provides a list of seafood restaurant names: Fish House and Shrimp Hut. The user may select any of these exemplary categories, subcategories, or names of a POI, or any other classification of POIs, and thus form a subset of the POIs that are preferred visitation points.

For example, if the user selects seafood at classification 74, and visitation point 64, shown in Figs. 4A-4D, is a Fish House restaurant, which is included in the subcategory of seafood fine dining restaurants, navigation system 10 will alert the user of visitation point 64 if it is located within the predetermined location defined in part by geographic area 50. As shown in Fig. 4A, when vehicle 1 is located on first road 65, visitation point 64 is not located within geographic area 50b, and therefore navigation system 10 will not alert the user of visitation point 64 at the time vehicle 1 is located at that position. However, as shown in Fig. 4B, as geographic area 50b follows the route of travel ahead of the present vehicle position and along second road 66, visitation point 64 is now located within geographic area 50c, and therefore navigation system 10 will alert the user of the proximity of visitation point 64 to vehicle 1 at that time. However, note that if POI 68 is not included in the selected subcategory, *i*.*e*., seafood restaurants, navigation system 10 will not alert the user of its location within geographic area 50c.

Similarly, as shown in Fig. 4C, when vehicle 1 is located on first road 65, although visitation point 64 is located within geographic area 50d, because the present position of vehicle 1 is not located within geographic area 50d, navigation system 10 will not alert the user of visitation point 64 at the time vehicle 1 is located at that position. However, as shown in Fig. 4D, when both vehicle 1 and visitation point 64 are located within geographic area 50d, navigation system 10 will alert the user of the proximity of visitation point 64 to destination 62 and/or vehicle 1 at that time.

The predetermined location used for determining an alert may be additionally defined by the user selected alert time. The predetermined location, such as geographic areas 50b and 50c in Figs. 4A and 4B, is located based on the vehicle's present position at the user selected alert time. Therefore, a condition of navigation system 10 alerting the user of visitation point 64 is that the time at which visitation point 64 is within geographic area 50 must be proximate to the user selected time. For example, within the selected beginning and end times or within a specific number of minutes of the user selected time.

Navigation system 10 may also provide the user with an alert of a nearby service station or other POI that provides a specified vehicle service. For example, referring to Fig. 2, navigation processor 20 may receive vehicle status information via vehicle bus interface 42. Based on the vehicle status information, processor 20 may determine that a specified vehicle service is advisable, for example, based on remaining fuel, engine temperature, oil pressure, check engine indication, or any other such data available to processor 20. Specifically, the user could select a specific brand name of fuel supplier for a service POI alert that is provided when the vehicle fuel level drops below one-eighth of a tank.

A first exemplary scenario of navigation system 10 is as follows. If a user is planning a trip from Kokomo to Detroit and is leaving at 10:00 a.m., the user can select Fish House and Shrimp Hut as desired eating POIs and specify a time window of 11:30 a.m. to 12:00 p.m. The driver may also select the POIs to be within five minutes driving time from the vehicle position. Priority could be given to those POIs requiring the least deviation from the route, *i.e.*, in front of rather than behind the vehicle position, and may list them in order of distance or estimated time of travel from the vehicle. Once navigation system 10 presents a POI alert to the user, the user can select one of the POIs or ignore the alert. An alert may consist of a voice message, a display message, a tone, or a combination. Once the selected time expires, the selected alert may automatically be turned off. Additionally, the user may specify that gas stations within a predetermined location relative to the vehicle position be specified any time the fuel level drops below one-eighth of a tank.

A second exemplary scenario of navigation system 10 is as follows. The user is planning a trip from Kokomo to a destination in Detroit, the user can select Fish House and Shrimp Hut as desired eating points of interest and specify a predetermined location of within five minutes driving time from the destination. Once navigation system 10 determines that vehicle 1 is within the geographic area defined by five minutes' driving time from the destination, navigation system 10 presents a point of interest alert to the user for any Fish House or Shrimp Hut restaurants within the specified driving time. Priority could be given to those points of interest requiring the least deviation from the route.

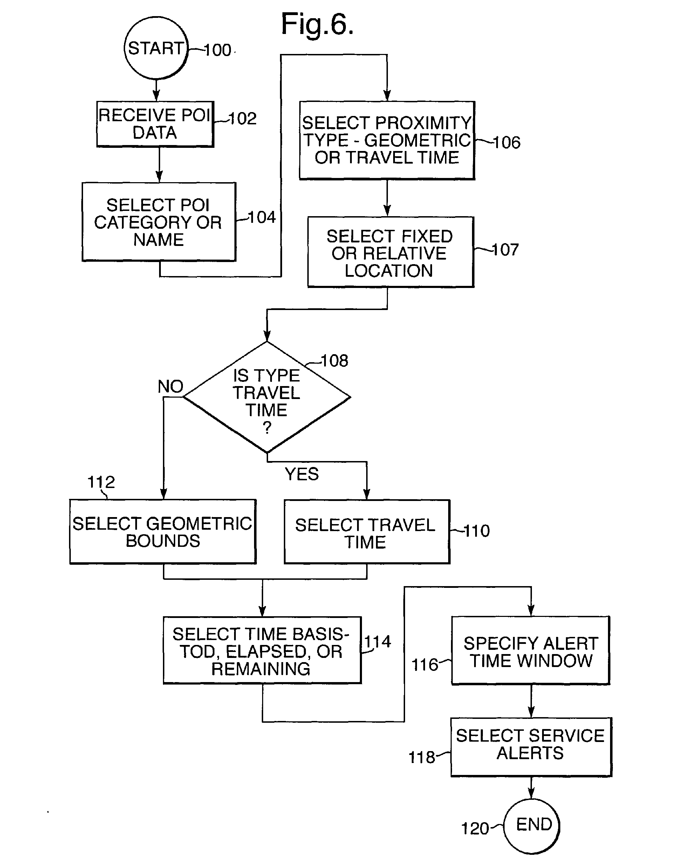

Fig. 6 is a flowchart illustrating method 100 which includes steps for selecting a visitation point alert in navigation system 10 in accordance with an exemplary embodiment of the present invention. In step 102, navigation processor 20 receives data representing POIs. The data may be stored in ROM 24 or RAM 26, or may be received from key matrix 14, CD/DVD player 16, memory card 18, radio/audio processor 28, data communication interface 40, information service provider 90, a PDA (not shown), or a personal computer (not shown). The received data may include not only the location, category, and name of the POI, but they may also include other specific information that could be communicated to the user via display 12 or audio processor 28, such as address, operating hours, and telephone number.

In step 104, the user selects a POI category, subcategory, business name or other classification, thus specifying a subset of preferred visitation points 64 for which navigation system 10 will alert the user. User interface features may include, for example, layered menus, as shown in Fig. 5, or the ability to search for a business or classification by entering a name via key matrix 14 or speech recognition software, or other user interface methods as are known in the art and may be included in navigation system 10.

In step 106, the user selects the type of predetermined location which will be used for determining those visitation points that are located relative to the vehicle's present position such that an alert is provided. For example, the user may specify a geographic area, such as an ellipse having a specified major or minor axis and having the major axis oriented along the route of travel, or an area defined by a specified travel time from the vehicle position or selected destination. In step 107, the user selects the relative location of the predetermined location, *i.e.*, fixed to a selected destination, or located relative to the vehicle present position.

If in step 108 navigation processor 20 determines that the user selected geographic area 50 is travel time, then step 110 is performed. In step 110, the user selects a travel time, for example, three minutes. If the user does not specify a travel time, a default travel time may be used.

If in step 108 navigation processor 20 determines that user selected geographic area 50 is not based on travel time, then step 112 is performed. In step 112, the user selects a specific geographic area, such as elliptical shaped geographic area 50b shown in Fig. 4A.

In step 114, if desired, the user selects a location definition, e.g. a time basis such as time of day, elapsed trip time, or remaining time to destination 62.

In step 116, in terms of the location definition selected in step 114, if selected, the user specifies an alert definition. For example, the user may specify 11:00 a.m. or a time window such as 10:50 a.m. to 11:10 a.m. as the relevant alert parameters.

In step 118, the user may select vehicle service alerts. For example, the user may select the category gas stations, or brand name Big Tank as a preferred visitation point for which an alert that will become active upon navigation processor 20 receiving data from vehicle bus interface 42 indicating that the vehicle fuel tank is below one-eighth of a tank.

Navigation processor 20 completes method 100 at step 120. Method 100 can be repeated beginning with step 102 or step 104 when an input from the user interface indicates the user desires to select another visitation point alert.

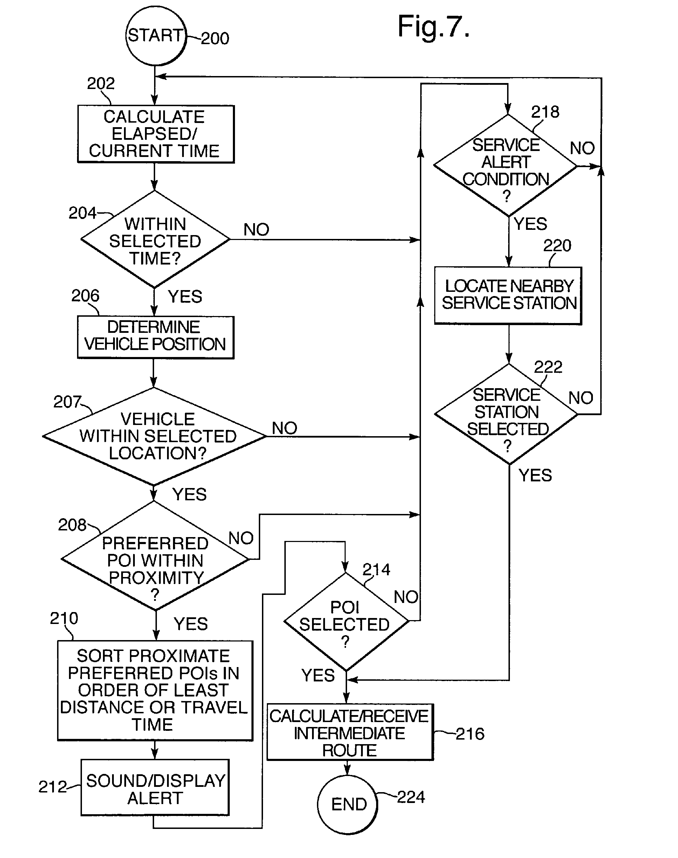

Fig. 7 is a flowchart illustrating method 200, which includes steps for alerting a user of vehicle navigation system 10 of a selected visitation point 64.

In step 202, navigation processor 20 calculates the current time on the basis that the user selected in step 114 of method 100.

In step 204, navigation processor 20 determines whether the present time is within the selected time. If the present time is within the selected time, then in step 206 navigation processor 20 determines the vehicle's present position, for example, based on signals received from GPS receiver 36. If in step 204 the present time is not within the selected time, then in step 218 navigation processor 20 determines whether a selected service alert condition is present, as described below.

In step 207, navigation processor 20 determines whether the vehicle's present position is within the selected location (or geographic area). If the selected location is located relative to the vehicle's present position, then the vehicle's present position will always be within the selected location. However, if the selected location is fixed relative to a selected destination, then the vehicle's present position will only be located within the selected location as the vehicle approaches the selected destination. If in step 207 it is determined that the vehicle is not located within the selected location, then step 218 is completed, else step 208 is completed.

In step 208, navigation processor 20 determines a subset of the preferred visitation points that are located within the predetermined location relative to the vehicle position. For example, in Fig. 4A, there are no preferred visitation points within geographic area 50b, and in Fig. 4B, visitation point 64 is located within geographic area 50c. If at least one visitation point is identified, then in step 210 navigation processor 20 sorts the subset of preferred visitation points in order of the least distance or travel time from the present vehicle position. If no visitation points are identified in step 208, then in step 218 navigation processor 20 determines whether a selected service alert condition is present, as described below.

In step 212, navigation processor 20 alerts the user of the subset of preferred visitation points that are located within the predetermined location. For example, an audible alert may be produced by audio processor 28, and the list of visitation points may be displayed on display 12. Additionally, if navigation processor 20 or audio processor 28 include a voice processor or a data file containing an audio message related to visitation points, then an audio alert or information message may be provided to the user.

In step 214, the user may select one of the preferred visitation points from the displayed or announced subset. For example, a visitation point may be selected using fixed pushbuttons 14 on faceplate 11 of navigation system 10, or by receiving speech-to-text conversion of a user voice command. If a selected visitation point is received, in step 216 navigation processor 20 calculates an intermediate route to the visitation point as described below.

If a selected visitation point is not received in step 214, then in step 218, navigation processor 20 determines whether a selected service alert condition is present, for example, the vehicle fuel level below one-eighth of a tank. If a selected service alert condition is present, then in step 220 processor 20 determines a subset of POIs or selected visitation points, as described below. If a selected service condition is not present, the navigation processor 20 performs method 200 again beginning at step 202.

In step 220, navigation processor 20 determines a subset of POIs or selected visitation points that provide the specified vehicle service and that are within a predetermined location relative to the vehicle position. For example, for a low fuel indication, gas stations within a specified travel time or geographic area 50 will be selected. Or, if the user has selected a brand name, such as Big Tank, the nearest Big Tank location will be added to the subset.

In step 222, the user may select a service station or other POI from the subset determined in step 220 in accordance with the methods described in step 214 above. If a selection is made, in step 216 navigation processor 20 calculates an intermediate route from the present vehicle position to the selected POI. Alternatively, navigation processor 20 may receive an intermediate route from, for example, information service provider 90.

If in step 220 a user selection is not received by navigation processor 20, then method 200 will be repeated starting at step 202, described above.

After step 216, navigation processor 20 has completed method 200 in step 224. Method 200 will be performed again, beginning at step 200 when navigation processor 20 receives another user selected alert.

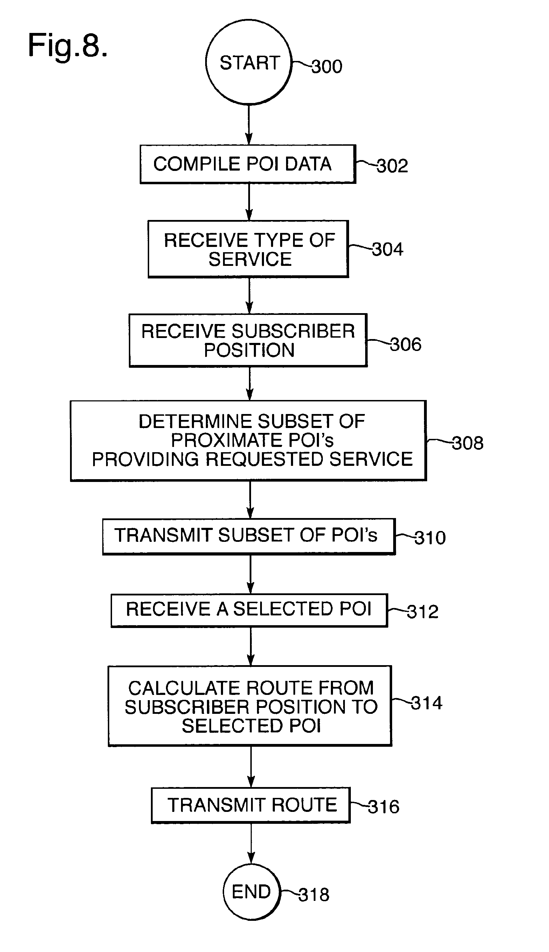

Fig. 8 is a flowchart of method 300 including steps for providing POI information to an information subscriber. An information subscriber may be, for example, vehicle navigation system 10, and the method may be performed by a processor either onboard navigation system 10, such as navigation processor 20, or off-board, for example, by information service provider 90.

In step 302, data representing POIs and any services provided by the POIs are collected by the processor from sources and data transfer methods as are known in the art, for example, from a digital navigation database provider such as Navigation Technologies, Inc. (www.navtech.com).

In step 304, a requested type of service is received by the processor from the information subscriber. For example, the requested service may be related to the vehicle, such as providing fuel, or a user requirement, such as providing food.

In step 306, the processor receives the position of the information subscriber, for example, the present position of vehicle 1.

In step 308, the processor determines a subset of the POIs that are within a predetermined location relative to the present position or the selected destination and that provide the requested service.

In step 310, the processor provides the subset of the POIs to the information subscriber.

In step 312, the processor receives a selection of one of the POIs of the subset from the information subscriber.

In step 314, the processor determines a route from the information subscriber present position to the selected POI.

In step 316, the calculated route is transmitted or otherwise provided by the processor to the information subscriber.

In step 318, method 300 is complete and will be performed again beginning at step 304 when the processor receives another service request from the information subscriber.

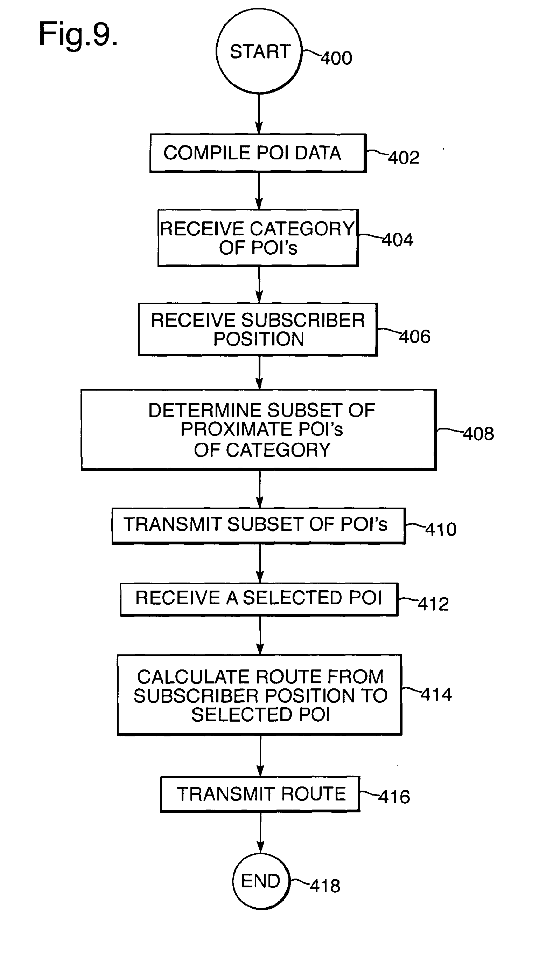

Fig. 9 is a flowchart of method 400 including steps for providing POI information to an information subscriber, such as vehicle navigation system 10. The method may be performed by a processor either onboard navigation system 10, such as navigation processor 20, or off-board, for example, by information service provider 90.

In step 402, data representing POIs is collected by the processor from sources and data transfer methods as are known in the art, for example, from a digital navigation database provider such as Navigation Technologies, Inc. (www.navtech.com).

In step 404, the processor receives a selected category of POIs from the information subscriber.

In step 406, the processor receives the position of the information subscriber, for example, the vehicle's present position.

In step 408, the processor determines a subset of the POIs that are within a predetermined location relative to the position and that are also of the selected category.

In step 410, the subset is transmitted or otherwise provided by the processor to the information subscriber.

In step 412, the processor receives a selection of one of the POIs of the subset from the information subscriber.

In step 414, the processor calculates a route from the present position to the selected POI of the subset.

In step 416, the processor provides the calculated route to the information subscriber.

In step 418, method 400 is complete and will be performed again beginning at step 404 when the processor receives another selected category of POIs from the information subscriber.

Advantageously, the present invention provides a vehicle navigation system that allows a user to select preferred visitation points from points of interest (POIs) and that determines and indicates the preferred visitation points that are located within a predetermined location relating to the vehicle's present position or a selected destination. By specifying an alert time, the user can advantageously select desired visitation points and times while planning a route and before beginning travel. The user may also specify a particular shape and size of a geographic area positioned relative to the vehicle or destination, or may specify an estimated travel time required to reach the POI. When the selected criteria is met, navigation system 10 may provide a display or audible alert of visitation point.

The user may also advantageously select from among categories, subcategories, names, or other classifications of POls. For example, classification 70 provides the categories of food, hotel, and gas from which the user may select.

Additionally, the navigation system is capable of monitoring the vehicle condition and, if vehicle service is advisable, can locate nearby POIs providing the required service and calculate a route to a selected POI.

The present invention also advantageously provides methods of providing POI information to an information subscriber, such as a vehicle navigation system. The method provides for the receiving of a category of POIs or type of service request from the information subscriber and providing the information subscriber with a subset of POIs providing the requested type of service or category of POIs which are located within a predetermined location relative to the information subscriber or a selected destination.

The embodiments disclosed below are not intended to be exhaustive or limit the invention to the precise forms disclosed in the following detailed description. Rather, the embodiments are chosen and described so that others skilled in the art may utilize their teachings.

Although described in the exemplary embodiments, it will be understood that various modifications may be made to the subject matter without departing from the intended and proper scope of the invention.

## Claims

1. A navigation apparatus (10) for assisting locating points of interest during vehicle navigation, said apparatus including a processor (20) coupled with a user interface (12-15, 16, 19, 28) and data storage (16, 18, 24, 26) capable of storing data representing points of interest, said apparatus **characterized by**:
a position (36) indicating device enabling the processor to determine a vehicle position; and
software enabling said processor to:
receive and store a user selection of a predetermined location (50) and at least one preferred visitation point from the points of interest; and
determine and indicate through said user interface a subset (64) of said preferred visitation points that are located proximate the predetermined location.

2. The navigation apparatus of claim 1, **characterized in that** said predetermined location is located based on said vehicle position at a user selected time.

3. The navigation apparatus of claim 2, **characterized in that** said user selected time is based on the time of day.

4. The navigation apparatus of claim 2, **characterized in that** said user selected time is based on one of elapsed or remaining trip time.

5. The navigation apparatus of claim 1, **characterized in that** said predetermined location is determined by the bounds of a geographic area (50b, 50c) located around said vehicle position.

6. The navigation apparatus of claim 5, **characterized in that** said geographic area is defined such that said geographic area bounds a portion of a vehicle travel route in the forward direction from said vehicle position.

7. The navigation apparatus of claim 1, **characterized in that** said predetermined location (50d) is determined by the bounds of a geographic area located around a selected destination.

8. The navigation apparatus of claim 1, **characterized in that** said predetermined location (50a) is determined by a maximum travel time from at least one of said vehicle position and a selected destination to said preferred visitation points.

9. The navigation apparatus of claim 1, **characterized in that** said software enables said processor to receive vehicle status information relating to required service of the vehicle and wherein said subset includes visitation points capable of providing said required service.

10. The navigation apparatus of claim 1, **characterized in that** said software enables the processor to calculate a route from said vehicle position to at least one visitation point of said subset.

11. The navigation apparatus of claim 10, **characterized in that** said route is provided upon user selection of one of said at least one visitation point of said subset.

12. The navigation apparatus of claim 1, further **characterized by** a data interface for at least one of a memory card (18), a random access media device, a CD player (16), a DVD player (16), a data communication port (40), and a wireless port (19), said processor capable of receiving through said data interface at least one of said at least one preferred visitation points, said data representing points of interest, and a route from said vehicle position to one of said at least one visitation point of said subset.

13. The navigation apparatus of claim 1, further **characterized by** an audio processor (28) connected with said user interface, said audio processor capable of indicating by audio alert said subset.

14. The navigation apparatus of claim 1, **characterized in that** said position indicating device includes a global positioning system (GPS) receiver.

15. A method (100, 200) of providing a point of interest alert in a user interface (12-15, 19, 28) in a vehicle navigation apparatus (10) to notify a user of the proximity of points of interest, **characterized by** the steps of:
selecting at least one preferred category of points of interest (104);
selecting a predetermined location (106-114);
determining the vehicle position (206);
determining a subset (64) of the points of interest of the at least one preferred category that are proximate the predetermined location (204, 208); and
alerting the user of the subset (212).

16. The method of claim 15, further **characterized by** the step of receiving a user selected time (116), and wherein the predetermined location is located based on the vehicle position at the user selected time.

17. The method of claim 16, **characterized in that** the user selected time is based on the time of day.

18. The method of claim 16, **characterized in that** the user selected time is based on one of elapsed or remaining trip time.

19. The method of claim 16, **characterized in that** the predetermined location is determined by the bounds of a geographic area (50b, 50c) located around the vehicle position.

20. The method of claim 19, **characterized in that** the geographic area (50c) is defined such that it evenly bounds a portion of a vehicle travel route in the forward direction from the vehicle position.

21. The method of claim 15, **characterized in that** the predetermined location (50d) is determined by the bounds of a geographic area located around a destination (62).

22. The method of claim 15, **characterized in that** the predetermined location (50a) is determined as a maximum travel time from at least one of the vehicle position and a destination (62) to the point of interest.

23. The method of claim 15, further **characterized by** receiving a user selection of one point of interest of the subset (214).

24. The method of claim 15, further **characterized by** the step of determining a route from the vehicle position to one point of interest of the preferred category (216).

25. The method of claim 15, further **characterized by** the step of receiving from a third party at least one of data representing points of interest (102) and a route from the vehicle position to one point of interest of the preferred category (216).

26. A method (100, 200) of providing a point of interest alert in a vehicle navigation apparatus, **characterized by** the steps of:
receiving vehicle status information (218);
determining if a specified vehicle service is advisable (218);
determining the vehicle position (206);
determining a subset of points of interest that provide the specified vehicle service and that are within a predetermined location relative to the vehicle position (220); and
alerting the driver of the subset (212).

27. The method of claim 26, further **characterized by** the step of receiving a user selection of at least one point of interest of the subset (222).

28. The method of claim 27, further **characterized by** the step of determining a route from the vehicle position to the selected point of interest (216).

29. The method of claim 26, further **characterized by** the step of receiving a selection of a preferred type of points of interest (118), and wherein the subset only includes points of interest of the preferred type.

30. The method of claim 26, further **characterized by** the step of receiving from a third party at least one of data representing points of interest (102) and a route from the vehicle position to one of the points of interest (216).

31. Software for a processor (20) in a vehicle navigation apparatus (10), the software enabling the processor to perform a method (100, 200) of providing a point of interest alert, **characterized by** the steps of:
selecting at least one preferred category of points of interest (104);
selecting a predetermined location (106-114);
determining the vehicle position (206);
determining a subset of the points of interest of the preferred category that are proximate the predetermined location (204, 208); and
alerting the user of the subset (212).

32. The software of claim 31, **characterized in that** the method further comprises the step of receiving a user selected time (116), and wherein the predetermined location is located based on the vehicle position at the user selected time.

33. The software of claim 32, **characterized in that** the user selected time is based on the time of day.

34. The software of claim 32, **characterized in that** the user selected time is based on one of elapsed or remaining trip time.

35. The software of claim 32, **characterized in that** the predetermined location is determined by the bounds of a geographic area (50b, 50c) located around the vehicle position.

36. The software of claim 35, **characterized in that** the geographic area (50c) is defined such that it evenly bounds a portion of a vehicle travel route in the forward direction from the vehicle position.

37. The software of claim 31, **characterized in that** the predetermined location is determined by the bounds of a geographic area (50d) located around a destination (62).

38. The software of claim 31, **characterized in that** the predetermined location (50a) is determined as a maximum travel time from at least one of the vehicle position and a destination (62) to the point of interest.

39. The software of claim 31, **characterized in that** the method further comprises the step of receiving a user selection of one point of interest of the subset (214).

40. The software of claim 31, **characterized in that** the method further comprises the step of determining a route from the vehicle position to one point of interest of the preferred category (216).

41. A method (300) of providing point of interest information to an information subscriber, **characterized by** the steps of:
receiving a type of service from the information subscriber (304);
receiving a preferred position from the information subscriber (306);
determining a subset of the points of interest that are within a predetermined location relative to the preferred position and that provide the requested service (308); and
providing the subset to the information subscriber (310).

42. The method of claim 41, **characterized in that** the information subscriber is a vehicle navigation apparatus (10).

43. The method of claim 41, further **characterized by** the step of receiving from the information subscriber a selection of one point of interest of the subset (312).

44. The method of claim 43, further **characterized by** the steps of:
determining a route from the position to the selected point of interest (314); and
providing the route to the information subscriber (316).

45. A method (400) of providing point of interest information to an information subscriber, **characterized by** the steps of:
receiving a category of points of interest from the information subscriber (404);
receiving a preferred position from the information subscriber (406);
determining a subset of the points of interest that are within a predetermined location relative to the preferred position and that are of the received category (408); and
providing the subset to the information subscriber (410).

46. The method of claim 45, **characterized in that** the information subscriber is a vehicle navigation apparatus.

47. The method of claim 45, further **characterized by** the step of receiving from the information subscriber a selection of one point of interest of the subset (412).

48. The method of claim 47, further **characterized by** the steps of:
determining a route from the position to the selected point of interest (414); and
providing said route to the information subscriber (416).
